# EUROPEAN PATENT SPECIFICATION

(11) **EP 0 787 610 B1**
(45) Date of publication and mention of the grant of the patent: **14.11.2001**
(21) Application number: 96927888.6
(22) Date of filing: 22.08.1996
(51) Int. Cl.: B60H 1/08, F24J 3/00

(54) **VISCOUS HEATER**
DICKSTOFFHEIZUNG
CHAUFFAGE UTILISANT LA VISCOSITE

(30) Priority: 25.08.1995 JP 21703595
(43) Date of publication of application: 06.08.1997
(73) Proprietor: Kabushiki Kaisha Toyoda Jidoshokki Seisakusho, Aichi-ken 448 (JP)
(72) Inventor: BAN, Takashi Kabushiki Kaisha Toyoda Jidoshokki, Aichi-ken 448 (JP); MORI, Hidefumi Kabushiki Kaisha Toyoda Jidoshokki, Aichi-ken 448 (JP); YAGI, Kiyoshi Kabushiki Kaisha Toyoda Jidoshokki, Aichi-ken 448 (JP)
(74) Representative: Pellmann, Hans-Bernd, Dipl.-Ing.
(86) International application number: PCT/JP96/02362
(87) International publication number: WO 97/08002

(56) References cited:
- EP-A- 0 610 914
- DE-A- 19 635 338
- JP-A- 2 246 823
- US-A- 3 655 295
- US-A- 3 720 372
- US-A- 4 030 406

## Description

The present invention relates to a viscous heater according to claim 1. In such a viscous heater a viscous fluid is caused to generate heat by shearing. The resulting heat is utilized as a thermal source for heating by carrying out heat exchange with a circulating fluid which circulates in a radiator chamber.

From the document DE 196 35 338 A1, which is a prior art document pursuant to Article 54(3) and (4) EPC, a viscous heater is known comprising a radiator chamber in which a circulating fluid circulates, and a closed heat generating chamber including viscous fluid.

Conventionally, in JP-2-246,823, a viscous heater is disclosed which is utilized as a heating apparatus for a vehicle. In this viscous heater, a front housing and a rear housing are disposed so as to face with each other, and are fastened by through bolts, thereby forming a heat-generating chamber and a water jacket therein. The water jacket is disposed around an outer region of the heat-generating chamber. In the water jacket, circulating water is circulated so that it is taken in through a water inlet port, and that it is delivered out to an external heating circuit through a water outlet port. In the front housing, a driving shaft is held rotatably via a bearing apparatus. To the driving shaft, a rotor is fixed so that it can rotate in the heat-generating chamber. A wall surface of the heat-generating chamber and an outer surface of the rotor constitute labyrinth grooves which approach to each other. In a space between the wall surface of the heat-generating chamber and the outer surface of the rotor, a viscous fluid, such as a silicone oil, is interposed.

In the viscous heater built into a vehicle heating apparatus, the rotor rotates in the heat-generating chamber when the driving shaft is driven by an engine. Accordingly, the viscous fluid is caused to generate heat by shearing in the space between the wall surface of the heat-generating chamber and the outer surface of the rotor. The thus generated heat is heat-exchanged to the circulating water in the water jacket. The heated circulating water is used at the heating circuit to 1 eat a vehicle.

However, in the above-described conventional viscous heater, there is a fear of leaking the viscous fluid to the outside, because the heat-generating chamber is communicated with the outside by way of the bearing apparatus. In view of this, it is possible to think of disposing a shaft-sealing apparatus.
However, when a shaft-sealing apparatus is simply provided, there remains a fear that a rubber-like material in the shaft-sealing apparatus is degraded by the thermal influence, which results from the viscous fluid held in the heat-generating chamber. Moreover, after durability, there also arises a fear of leaking the viscous fluid.

It is therefore an object of the present invention to provide a viscous heater which can inhibit a viscous fluid from leaking even after durability.
The above object is achieved by the combination of features set forth in claim 1. Preferred embodiments of the subject-matter of claim 1 are specified in the dependent claims.

In the viscous heater according to the invention, there is no fear of leaking the viscous fluid to the outside, because the shaft-sealing apparatus is disposed to seal the driving shaft between the heat-generating chamber and the bearing apparatus. Moreover, the fear of deteriorating a rubber-like material in the shaft-sealing apparatus by the thermal influence, which results from the viscous fluid held in the heating chamber, is diminished, because the rubber-like material in the shaft-sealing apparatus is cooled actively by a cooling means.

Furthermore, in the viscous heater according to the invention, a rubber-like material in the shaft-sealing apparatus is cooled indirectly by the circulating fluid circulating in the radiator chamber, because the radiator chamber is formed adjacent to the shaft-sealing apparatus. Accordingly, the fear of deteriorating a rubber-like material by the thermal influence, which results from the viscous fluid held in the heating chamber, is diminished. Moreover, a temperature increment is thereby realized in the circulating fluid. Here, the term, "adjacent to", means that the radiator chamber and the shaft-sealing apparatus are disposed close to each other by way of a wall of the housing only.

Moreover, in the viscous heater according to the invention there is no fear of leaking the viscous fluid to the outside, because the shaft-sealing apparatus for sealing the driving shaft is disposed between the heat-generating chamber and the bearing apparatus. Moreover, the durability of the shaft-sealing apparatus is enhanced, because the cooling means deprives the heat of the viscous fluid until the viscous fluid arrives at the shaft-sealing apparatus.

In another viscous heater according to the invention, the fear of deteriorating a rubber-like material in the shaft-sealing apparatus by the thermal influence, which results from the viscous fluid held in the heating chamber, is diminished, because the shaft-scaling apparatus is separated away from the heat-generating chamber.
Here, the term, "being separated away from", means a state in which the viscous fluid radiates off the heat caused therein while it comes out from the heat-generating chamber and arrives at the shaft-sealing apparatus.

In another viscous heater, the cooling means of the viscous heater is further embodied. Hence, the durability of the shaft-sealing apparatus is further enhanced, because the shaft-sealing apparatus is cooled by the circulating fluid circulating in the radiator chamber disposed in rear of the shaft-sealing apparatus, and because the radiating means deprives the heat of the viscous fluid until the viscous fluid arrives at the shaft-sealing apparatus.

When a labyrinth is formed in an inner peripheral surface of the boss of an inventive viscous heater, the heat can be radiated off from the boss to the labyrinth to cool the shaft-sealing apparatus (the fin effect), and simultaneously the viscous fluid can be kept from leaking by the labyrinth (the sealing effect).

In the following, preferred embodiments of the viscous heater according to the invention are described with reference to the accompanying figures.

Fig. 1 is a vertical cross-sectional view of a viscous heater of a First

### Preferred Embodiment.

Fig. 2 is a horizontal cross-sectional view of the viscous heater of the First

### Preferred Embodiment.

Fig. 3 is concerned with the viscous heater of the First Preferred Embodiment, and is a schematic diagram for illustrating a flow of circulating water therein.

Fig. 4 is a vertical cross-sectional view of a viscous heater of a Second

### Preferred Embodiment.

Fig. 5 is a vertical cross-sectional view of a major portion of a viscous heater of Third Preferred Embodiment.

### (First Preferred Embodiment)

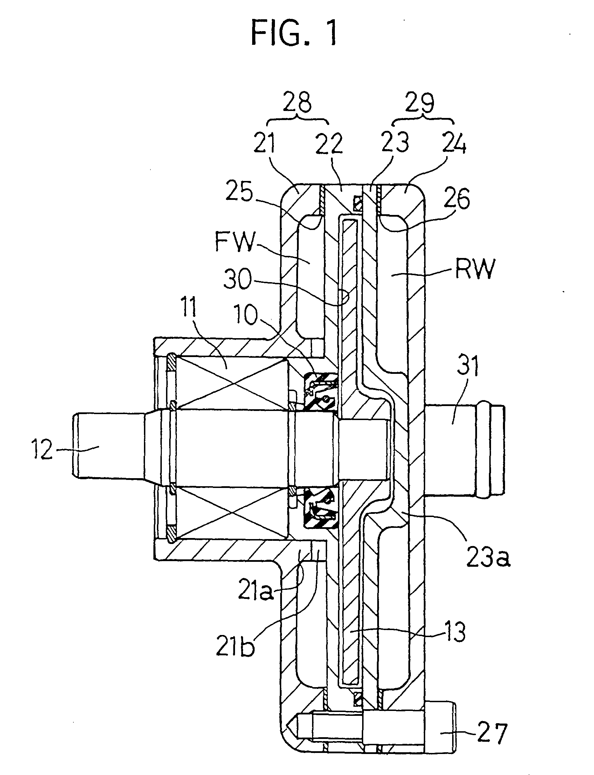

As illustrated in Fig. 1, in the viscous heater, a front housing body 21, a front plate 22, a rear plate 23 and a rear housing body 24 are overlapped and fastened by a plurality of through bolts 27 with a gasket 25 interposed between the front housing body 21 and the front plate 22, and with a gasket 26 interposed between the rear plate 23 and the rear housing body 24. The front and rear plates 22 and 23 are formed of an aluminum-based alloy. Here, the front housing body 21 and the front plate 22 constitute a front housing 28, and the rear plate 23 and the rear housing body 24 constitute a rear housing body 29. Further, a concavity is dented in a rear-end surface of the front housing body 21, and forms a heat-generating chamber 30 together with a flat front-end surface of the rear plate 23. Furthermore, an inner surface of the front housing body 21 and a front-end surface of the from plate 22 form a front water jacket FW. The front water jacket FW works as the front radiator chamber neighboring in front of the heat-generating chamber 30. Moreover, a rear-end surface of the rear plate 23 and an inner surface of the rear housing body 24 form a rear water jacket RW. The rear water jacket RW works as the rear radiator chamber neighboring in rear of the heat-generating chamber 30.

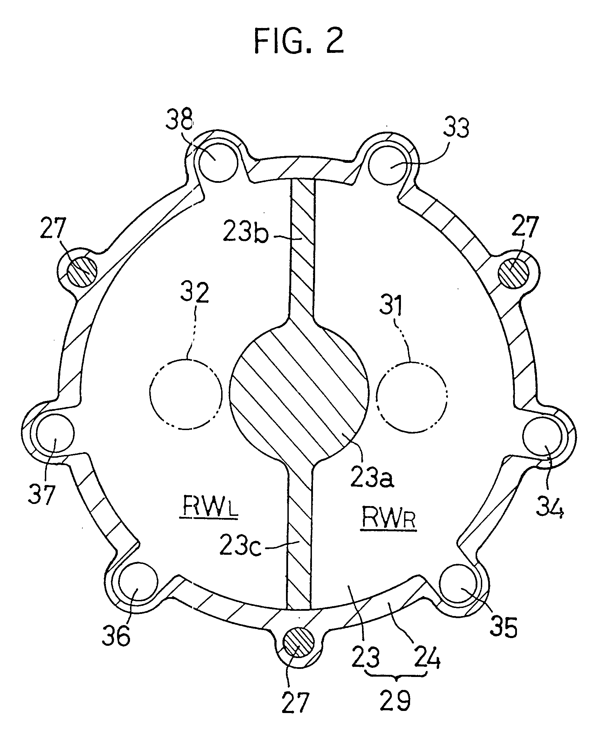

As illustrated in Fig. 2, in a central region on a rear surface of the rear housing body 24, a water inlet port 31 and a water outlet port 32 are formed next to each other. The water inlet port 31 works as the first port for taking in circulating water operating as the circulating fluid from an external heating circuit (not shown). The water outlet port 32 works as the second port for delivering the circulating water out to the heating circuit. The water inlet port 31 and the water outlet port 32 are communicated with the rear water jacket RW.

On a rear-end surface of the rear plate 23, a cylindrical convexity 23a is protruded in a central area. Moreover, partition walls 23b and 23c, which extend from the convexity 23a in opposite radial directions, are protruded between the water inlet port 31 and the water outlet port 32. As illustrated in Fig. 1, the leading end of the convexity 23a, and the partition walls 23b and 23c contacts with the inner surface of the rear housing body 24.

As illustrated in Fig. 2, in the gasket 26, the rear plate 23, the front plate 22 and the gasket 25, water passages 33 through 38 are drilled through, and are disposed between the through bolts 27 at equal intervals. The water passages 33 through 38 are formed as a round hole having the same cross-sectional area. Further, the water passages 33 through 35 are communicated from the rear water jacket RW, in which the water inlet port 31 is formed, to the front water jacket FW. Furthermore, the water passages 36 through 38 are communicated from the front water jacket FW to the rear water jacket RW, in which the water outlet port 32 is formed.

As illustrated in Fig. 1, a shaft-sealing apparatus 10 is disposed in the front plate 22, and a bearing apparatus 11 is disposed in the front housing body 21. Further, an inner boss 21a is protruded in the front housing body 21, and is extended to the side of the heat-generating chamber 30 in an axial direction. A plurality of openings 21b are drilled through the inner boss 21a, and work as the cooling means. Accordingly, the front water jacket FW is formed adjacent to the shaft-sealing apparatus 10 by leaving a margin of thickness (a wall) of the front plate 22 only. Furthermore, by way of the shaft-sealing apparatus 10 and the bearing apparatus 11, a driving shaft 12 is held rotatably. At the trailing end of the driving shaft 12, a plate-shaped rotor 13 is press-fitted so that it can rotate in the heat-generating chamber 30. A silicone oil, working as the viscous fluid, is interposed in the space between the wall surface of the heat-generating chamber 30 and the outer surface of the rotor 13. Thus, in the viscous heater, there is no fear of leaking the silicone oil to the outside, because the shaft-sealing apparatus 10 is disposed between the heat-generating chamber 30 and the bearing apparatus 11 in the front plate 22. At the leading end of the driving shaft 12, a pulley (not shown) is fixed by a bolt (not shown). The pulley is rotated by a vehicle engine via a belt.

In the viscous heater built-into a vehicle heating apparatus, the rotor 13 is rotated in the heat-generating chamber 30 when the driving shaft 12 is driven by the engine by way of the pulley. Accordingly, the silicone oil is sheared in the space between the wall surface of the heat-generating chamber 30 and the outer surface of the rotor 13, thereby generating heat. The resulting heat is heatexchanged to the circulating water flowing in the front water jacket FW and the rear water jacket RW, and the thus heated circulating water is used for heating a vehicle in the heating circuit.

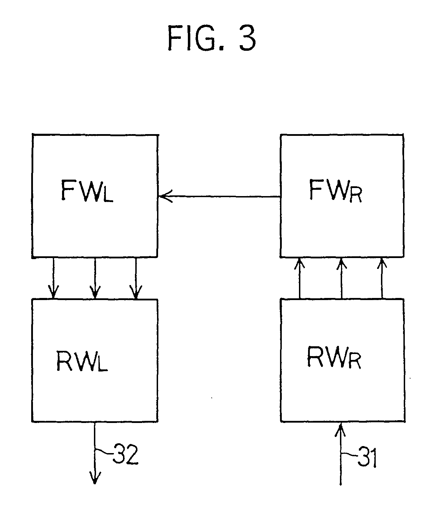

At this moment, as illustrated in Fig. 3, the circulating water is taken in into a right-side chamber RW_{R}, viewed from the rear of the rear water jacket RW, through the water inlet port 31. Then, the circulating water follows the route in the water passages 33 through 35, and arrives at a right-side chamber FW_{R}, viewed from the rear of the front water jacket FW. Further, the circulating water arrives at a left-side chamber FW_{L}, viewed from the rear of the front water jacket FW. Note that the left-side chamber FW_{L} is formed integrally with the right-side chamber FW_{R}. Furthermore, the circulating water follows the route in the water passages 36 through 38, and arrives at a right-side chamber RW_{L}, viewed from the rear of the rear water jacket RW. Eventually, the circulating water is delivered out to the heating circuit through the water inlet port 32. Thus, in the viscous heater, there is no fear of short-circuiting or residing the circulating water in the rear water jacket RW, because the circulating water is circulated along the specific routes in the rear water jacket RW. In addition, heat exchange can be also carried out by the water passages 33 through 38 efficiently.

As a result, the viscous heater is capable of carrying out full heat exchange.

Further, in the viscous heater, the rubber-like member of the shaft-sealing apparatus 10 is cooled indirectly by the circulating water which circulates in the front water jacket FW, because the front water jacket FW is formed up to the vicinity of the shaft-sealing apparatus 10. Accordingly, the fear of deteriorating the rubber-like member by the thermal effect, which results from the silicone oil held in the heat-generating chamber 30, is diminished. Furthermore, this advantageous effect realizes the temperature increment in the circulating water. Moreover, the aforementioned cooling, etc., of the shaft-sealing apparatus 10 can be carried out efficiently, because the front plate 22 is formed of an aluminum-based alloy of good thermal conductivity.

As a result, the viscous heater is capable of securely inhibiting the silicone oil from leaking even after durability.

Note that, instead of the pulley, an electromagnetic clutch can be employed to intermittently drive the driving shaft 12.

### (Second Preferred Embodiment)

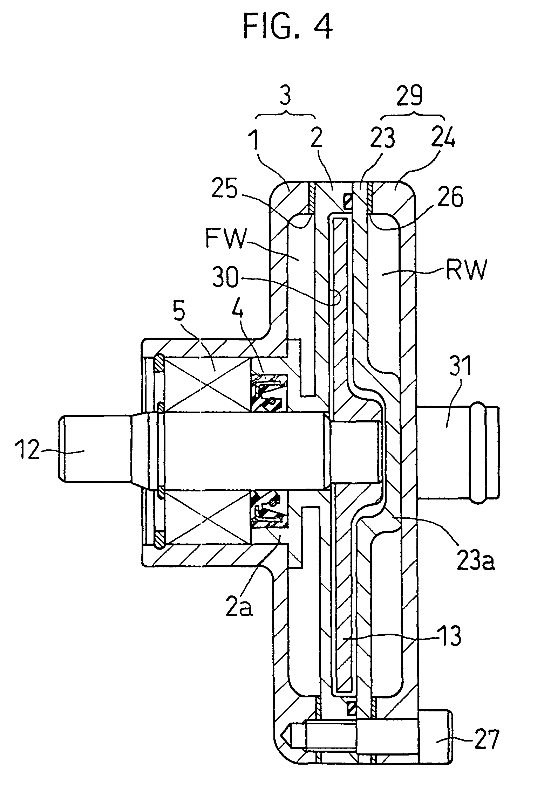

As illustrated in Fig. 4, in the viscous heater, a front housing body 1 is employed which is free from the protruding inner boss disposed in that of the First Preferred Embodiment. Further, as a front plate 2, a member having a boss 2a is employed. Into the boss 2a, a driving shaft 12 is fitted. These members constitute a front housing 3. Furthermore, a shaft-sealing apparatus 4 is disposed at the leading end of the boss 2a of the front plate 2 so that a front water jacket FW is positioned in rear of the shaft-sealing apparatus 4. Moreover, a bearing apparatus 5 is disposed in front of the shaft-sealing apparatus 4 in the front housing body 1. Consequently, the boss 2a separates the shaft-sealing apparatus 4 away from a heat-generating chamber 30 so as to constitute the radiating means. Unless otherwise specified, the other arrangements of the Second Preferred Embodiment are identical with those of the First Preferred Embodiment.

In the viscous heater, the shat-sealing apparatus 4 is cooled by the circulating water which circulates in the front water jacket FW, because the front water jacket FW is positioned in rear of the shaft-sealing apparatus 4. Moreover, in this arrangement, the silicone oil is deprived of heat by the front water jacket FW while in arrives at the shaft-sealing apparatus 4. Hence, compared with the arrangement where the shaft-sealing apparatus 4 is disposed adjacent to the heat-generating chamber 30, the durability of the shaft-sealing apparatus 4 can be readily improved. Unless otherwise specified, the Second Preferred Embodiment operates and effects advantages in the same manner as the First Preferred Embodiment.

As a result, the thus constructed viscous heater can inhibit the silicone oil from leaking more securely than the First Preferred Embodiment does even after durability.

### (Third Preferred Embodiment)

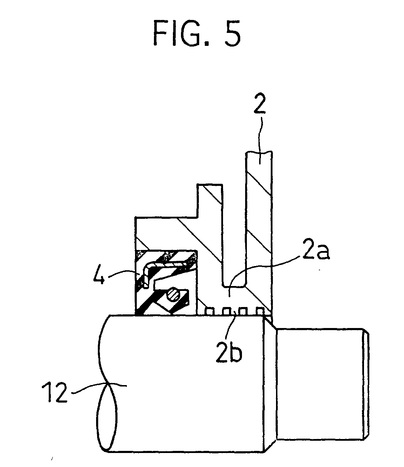

As illustrated in Fig. 5, in the viscous heater, a labyrinth 2b is formed in an inner surface of a boss 2a of a front plate 2. Unless otherwise specified, the other arrangements of the Third Preferred Embodiment are identical with those of the First and Second Preferred Embodiments.

In the viscous heater, the heat of the silicone oil resulting from the heat generation is radiated off from the labyrinth 2b to the boss 2a, and further to the front water jacket FW. Accordingly, while the silicone oil arrives at the shaft-sealing apparatus 4, the Third Preferred Embodiment can realize the temperature decrement in the silicone oil more efficiently than the Second Preferred Embodiment does. At the same time, in the Third Preferred Embodiment, the silicone oil can be sealed by the labyrinth 2b. The sealing of the silicone oil reduces the load exerted to the shaft-sealing apparatus 4. Unless otherwise specified, the Third Preferred Embodiment operates and effects advantages in the same manner as the First and Second Preferred Embodiments.

## Claims

1. A viscous heater, comprising:
a housing (28,29;3,29) in which a heat-generating chamber (30) and a radiator chamber (FW,RW) are formed, the radiator chamber (FW,RW) neighbouring the heat-generating chamber (30) and circulating a circulating fluid therein;
a driving shaft (12) held rotatably to said housing (28,29;3,29) by way of a bearing apparatus (5;11);
a rotor (13) disposed in said heat-generating chamber (30) rotatably by said driving shaft (12); and
a viscous fluid interposed in a space between a wall surface of said heat-generating chamber (30) and an outer surface of said rotor (13), and caused to generate heat by said rotating rotor (13);
wherein said housing (28,29;3,29) is provided with a shaft-sealing apparatus (4;10) sealing said driving shaft (12) between said heat-generating chamber (30) and said bearing apparatus, and with a cooling means (21b) for cooling the shaft-sealing apparatus (4;10).

2. A viscous heater according to claim 1, wherein said cooling means is constituted by forming said radiator chamber (FW,RW) adjacent to said shaft-sealing apparatus (4;10).

3. A viscous heater according to claim 1 or 2, wherein said cooling means is disposed between said heat-generating chamber (30) and said bearing apparatus (5).

4. A viscous heater according to claim 3, wherein said cooling means is constituted by disposing said shaft-sealing apparatus (4) so as to be separated away from said heat-generating chamber (30).

5. A viscous heater according to claim 2 or 4, wherein said housing includes a plate (2;22), and a housing body constituting the rest of said housing, the plate (2;22) forming a wall surface of said heat-generating chamber (30) with an axial end surface and a wall surface of said radiator chamber (FR,RW) with another axial end surface, and having a boss (2a) into which said driving shaft (12) is fitted, the boss (2a) having a leading end with said shaft-sealing apparatus (4;10) provided, thereby positioning said radiator chamber (FW,RW) in rear of said shaft-sealing apparatus (4;10).

6. A viscous heater according to claim 5, wherein a labyrinth (2b) is formed in an inner peripheral surface of said boss (2a).

## Patentansprüche

1. Viskositäts-Heizeinrichtung, die Folgendes aufweist:
ein Gehäuse (28, 29; 3, 29), in dem eine Wärmeerzeugungskammer (30) und eine Kühlkammer (FW, RW) ausgebildet sind, wobei die Kühlkammer (FW, RW) an der Wärmeerzeugungskammer (30) angrenzt und in diesen ein Umlauffluid umläuft;
eine Antriebswelle (12), die durch eine Lagervorrichtung (5; 11) drehbar an dem Gehäuse (28, 29; 3, 29) gehalten ist;
einen Rotor (13), der in der Wärmeerzeugungskammer (30) durch die Antriebswelle (12) drehbar angeordnet ist; und
ein viskoses Fluid, das in einem Raum zwischen einer Wandfläche der Wärmeerzeugungskammer (30) und einer äußeren Fläche des Rotors (13) vorgesehen ist und eine Erzeugung von Wärme durch die Drehung des Rotors (13) bewirkt;
wobei das Gehäuse (28, 29; 3, 29) mit einer die Antriebswelle (12) abdichtenden Wellendichtvorrichtung (4; 10) zwischen der Wärmeerzeugungskammer (30) und der Lagervorrichtung und mit einer Kühlvorrichtung (21b) zum Kühlen der Wellendichtvorrichtung (4; 10) versehen ist.

2. Viskositäts-Heizeinrichtung gemäß Anspruch 1,
wobei die Kühlvorrichtung durch ein Ausbilden der Kühlkammer (FW, RW) angrenzend an der Wellendichtvorrichtung (4; 10) gebildet ist.

3. Viskositäts-Heizeinrichtung gemäß Anspruch 1 oder 2,
wobei die Kühlvorrichtung zwischen der Wärmeerzeugungskammer (30) und der Lagervorrichtung (5) angeordnet ist.

4. Viskositäts-Heizeinrichtung gemäß Anspruch 3,
wobei die Kühlvorrichtung dadurch gebildet ist, dass die Wellendichtvorrichtung (4) getrennt von der Wärmeerzeugungskammer (30) angeordnet ist.

5. Viskositäts-Heizeinrichtung gemäß Anspruch 2 oder 4,
wobei das Gehäuse eine Platte (2; 22) und einen Gehäusekörper aufweist, der den Rest des Gehäuses bildet, wobei die Platte (2; 22) eine Wandfläche der Wärmeerzeugungskammer (30) mit einer axialen Endfläche und eine Wandfläche der Kühlkammer (FR, RW) mit einer anderen axialen Endfläche ausbildet und eine Nabe (2a) hat, in die die Antriebswelle (12) eingepasst ist, wobei die Nabe (2a) ein vorderes Ende mit der Wellendichtvorrichtung (4; 10) hat, die so vorgesehen ist, dass sich die Kühlkammer (FW, RW) hinter der Wellendichtvorrichtung (4; 10) befindet.

6. Viskositäts-Heizeinrichtung gemäß Anspruch 5,
wobei ein Labyrinth (2b) an einer inneren Umfangsfläche der Nabe (2a) ausgebildet ist.

## Revendications

1. Dispositif de chauffage visqueux, comprenant :
un logement (28, 29 ; 3 , 29) dans lequel une chambre de génération de chaleur (30) et une chambre de radiateur (FW, RW) sont formées, la chambre de radiateur (FW, RW) étant voisine de la chambre de génération de chaleur (30)
et un fluide de circulation circulant à travers elle ;
un arbre d'entraînement (12) maintenu de manière rotative par rapport audit logement (28, 29 ; 3 , 29) au moyen d'un palier (5; 11) ;
un rotor (13) disposé dans ladite chambre de génération de chaleur (30) de manière à pouvoir tourner grâce audit arbre d'entraînement (12) ; et
un fluide visqueux interposé dans un espace entre une surface de paroi de ladite chambre de génération de chaleur (30) et une surface extérieure dudit rotor (13), et amené à générer de la chaleur par ledit rotor rotatif (13) ;
dans lequel ledit logement (28, 29 ; 3 , 29) est pourvu d'un dispositif d'étanchéité (4 ; 10) réalisant l'étanchéité au niveau dudit arbre d'entraînement (12) entre ladite chambre de génération de chaleur (30) et ledit palier, et de moyens de refroidissement (21b) pour refroidir le dispositif d'étanchéité d'arbre (4 ; 1 0).

2. Dispositif de chauffage visqueux selon la revendication 1, dans lequel lesdits moyens de refroidissement sont constitués en formant ladite chambre de radiateur (FW, RW) contiguë audit dispositif d'étanchéité d'arbre (4 ; 10).

3. Dispositif de chauffage visqueux selon la revendication 1 ou 2, dans lequel lesdits moyens de refroidissement sont disposés entre ladite chambre de génération de chaleur (30) et ledit palier (5).

4. Dispositif de chauffage visqueux selon la revendication 3, dans lequel lesdits moyens de refroidissement sont constitués en disposant ledit dispositif d'étanchéité d'arbre (4) de manière à ce qu'il soit séparé et éloigné de ladite chambre de génération de chaleur (30).

5. Dispositif de chauffage visqueux selon la revendication 2 ou 4, dans lequel ledit logement comprend une plaque (2 ; 22) et un corps de logement constituant le reste dudit logement, la plaque (2 ; 22) formant une surface de paroi de ladite chambre de génération de chaleur (30) avec une surface d'extrémité axiale et une surface de paroi de ladite chambre de radiateur (FR, RW) avec une autre surface d'extrémité axiale, et comportant un bossage (2a) dans lequel ledit arbre d'entraînement (12) est ajusté, le bossage (2a) ayant une extrémité de tête sur laquelle ledit dispositif d'étanchéité d'arbre (4 ; 10) est prévu, positionnant de ce fait ladite chambre de radiateur (FW, RW) à l'arrière dudit dispositif d'étanchéité d'arbre (4 ; 10).

6. Dispositif de chauffage visqueux selon la revendication 5, dans lequel un labyrinthe (2b) est formé dans une surface périphérique intérieure dudit bossage (2a).
